(19) Europäisches Patentamt
European Patent Office
Office européen des brevets

(11) **EP 3 367 127 B1**

(12) **EUROPEAN PATENT SPECIFICATION**

(45) Date of publication and mention of the grant of the patent:
**19.01.2022 Bulletin 2022/03**

(21) Application number: **16856909.3**

(22) Date of filing: **20.10.2016**

(51) International Patent Classification (IPC):
*G01S 15/08* (2006.01)   *G01S 7/52* (2006.01)
*B64C 39/02* (2006.01)   *G01S 15/93* (2020.01)

(52) Cooperative Patent Classification (CPC):
**B64C 39/024; G01S 15/93;** B64C 2201/141

(86) International application number:
**PCT/CN2016/102726**

(87) International publication number:
**WO 2017/067478 (27.04.2017 Gazette 2017/17)**

(54) **UNMANNED AERIAL VEHICLE (UAV) AND DISTANCE MEASURING AND FILTERING DEVICE AND METHOD THEREOF AND DISTANCE MEASUREMENT METHOD BASED ON SAME**

UNBEMANNTES LUFTFAHRZEUG (UAV) SOWIE ENTFERNUNGSMESSUNGS- UND FILTERUNGSVORRICHTUNG UND VERFAHREN DAFÜR UND DARAUF BASIERENDES ENTFERNUNGSMESSVERFAHREN

VÉHICULE AÉRIEN SANS PILOTE (UAV) ET DISPOSITIF DE MESURE DE DISTANCE ET DE FILTRAGE ET PROCÉDÉ ASSOCIÉ ET PROCÉDÉ DE MESURE DE DISTANCE BASÉ SUR CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2015 CN 201510698196**

(43) Date of publication of application:
**29.08.2018 Bulletin 2018/35**

(73) Proprietor: **Guangzhou Xaircraft Technology Co., Ltd.**
**Guangzhou, Guangdong 510000 (CN)**

(72) Inventor: **CHEN, Yousheng**
**Guangzhou**
**Guangdong 510000 (CN)**

(74) Representative: **Maiwald Patent- und Rechtsanwaltsgesellschaft mbH**
**Elisenhof**
**Elisenstraße 3**
**80335 München (DE)**

(56) References cited:
| EP-A1- 2 202 487 | CN-A- 102 798 857 |
| CN-A- 103 365 297 | CN-A- 104 567 799 |
| CN-A- 104 567 799 | CN-A- 104 820 434 |
| CN-A- 105 223 575 | US-A- 5 731 782 |
| US-A- 6 043 867 | US-A1- 2011 311 099 |
| US-A1- 2015 268 136 | |

## Description

### FIELD

The present disclosure relates to the technical field of unmanned aerial vehicles (UAVs for short), and more particularly, to an unmanned aerial vehicle, a method for filtering in ranging of a UAV, a ranging method based on aforesaid method, and an apparatus for filtering in ranging of a UAV.

### BACKGROUND

To realize a low-altitude (especially near-ground) autonomous flight of an unmanned aerial vehicle (UAV for short), both an altitude of the UAV and a height of the UAV relative to the ground are needed to know. The altitude of the UAV may be measured via a barometer or GPS (Global Position System). The height of the UAV relative to the ground may be obtained by a sonar ranging, a laser ranging, a microwave radar ranging and a machine vision measuring, etc.

The laser ranging is susceptible to light. The machine vision measuring is quite complicated and also susceptible to light. While the sonar ranging is not susceptible to light and may be used in all weather, besides its system complexity is low. However, the sonar ranging used in the related art is in an environment totally different from the UAV, such as installing on a mobile robot or in a fixed interspace, data measured by a sonar sensor in this kind of environment is relatively accurate itself.

But the UAV environment has entirely different features from the environments in the related art, for example, a high-frequency vibration of a fuselage of the UAV caused by high speed rotation of a screw propeller, airflow disturbance caused by rotation of the screw propeller, rapid and repeated tilt changes of the attitude of the UAV during flight, unstable power supply caused by high speed rotation of the screw propeller, and the complicated ground environment during an air-to-ground ranging process of the UAV. These complex situations may bring serious noise into a UAV airborne sonar ranging, even cause a failure in ranging. Therefore a ranging filtering algorithm for the UAV application environment should be developed according to characteristics of the UAV itself.

Document US 2011/311099 A1 discloses the method operates by estimating the differential movement of the scene picked up by a vertically-oriented camera. Estimation includes periodically and continuously updating a multiresolution representation of the pyramid of images type modeling a given picked-up image of the scene at different, successively-decreasing resolutions.

Document US 5731782 A discloses a continuous wave ranging system, including a modulator, a transmitting antenna, a receiving antenna and receiver, and a correlator for correlating the detected signal with the transmitted code with a selected phase shift or delay corresponding to the current range gate to be tested.

Document US 2015/268136 A1 discloses a vehicle includes an aerial propulsion system, an altitude sensor system, a water sampling system, and a control system.

### SUMMARY

The invention is defined by the appended claims. A method for filtering in ranging of a UAV is provided according to embodiments of a first aspect of the present disclosure, which includes: acquiring N continuous distances based on a sonar sensor and determining an initial distance buffer queue and an initial moving velocity buffer queue of the UAV according to the N distances, in which, N is an integer greater than 2; filtering a current distance of the UAV measured based on the sonar sensor according to the initial distance buffer queue and the initial moving velocity buffer queue to obtain an actual distance of the UAV.

In an embodiment, determining the initial distance buffer queue and the initial moving velocity buffer queue of the UAV according to the N distances includes: obtaining N-1 moving velocities according to the N distances and calculating a difference level value of the N-1 moving velocities; determining whether each distance is valid according to the difference level value; when each distance is valid, constituting the initial distance buffer queue based on the N distances and constituting the initial moving velocity buffer queue based on the N-1 moving velocities.

In an embodiment, the difference level value includes a variance. Determining the initial distance buffer queue and the initial moving velocity buffer queue of the UAV according to the N distances includes: S11, finding derivatives of the N continuous distances with respect to time to obtain N-1 moving velocities of the UAV, in which the N continuous distances are measured in a preset time duration; S12, calculating a variance of the N-1 moving velocities; S13, determining whether the variance is less than or equal to a first preset value; S14, when the variance is less than or equal to the first preset value, constituting the initial distance buffer queue based on the N distances and constituting the initial moving velocity buffer queue based on the N-1 moving velocities.

In an embodiment, filtering the current distance of the UAV measured based on the sonar sensor according to the initial distance buffer queue and the initial moving velocity buffer queue to obtain the actual distance of the UAV includes: S21, moving the first distance in the initial distance buffer queue out, and executing acts S11 to S12 according to the remained N-1 distances and the current distance; S22, determining whether the current variance calculated is less than or equal to a second preset value; S23, when the current variance calculated is less than or equal to the second preset value, replacing the first distance in the initial distance buffer queue by the current distance so as to update the initial distance buffer queue, and taking the current distance as the actual distance of the UAV.

With the method for filtering in ranging of a UAV according to embodiments of the present disclosure, the initial distances measured by the sonar sensor are determined first, and then the derivatives of the initial distances are found to obtain the moving velocities of the UAV, and the variance of certain continuous velocities is calculated and it is determined whether the current distance is valid according to the variance, in which when the current distance satisfy a certain condition, the current distance is considered to be valid and the initial distances are updated; and when the current distance does not satisfy the certain condition, a distance is estimated and used as the current distance and the initial distances may be maintained. With the method, measurement noises of the sonar sensor in the UAV environment may be filtered, the filtering result may be satisfactory, and the measurement accuracy and stability of the sonar sensor are improved.

Moreover, the method for filtering in ranging of a UAV according to above embodiments of the present disclosure may have the following additional technical features.

In some examples, after act S22, the method further includes: S24, when the current variance calculated is greater than the second preset value, moving the N$^{th}$ distance in the initial distance buffer queue out, and executing acts S11 and S12 according to the remained N-1 distances and the current distance; and determining whether the current variance calculated is less than or equal to the second preset value; S25, when the current variance calculated is less than or equal to the second preset value, replacing the N$^{th}$ distance in the initial distance buffer queue by the current distance so as to update the initial distance buffer queue, and taking the current distance as the actual distance of the UAV.

In some examples, after act S24, the method further includes: S26, when the current variance calculated is greater than the second preset value, adding the current distance into a new buffer queue, and when the number of distances in the new buffer queue comes to N, finding derivatives of the new buffer queue with respect to time to obtain N-1 new moving velocities and calculating a variance of the N-1 new moving velocities; when the variance of the N-1 new moving velocities is less than or equal to the second preset value, replacing the initial distance buffer queue by the new buffer queue, and taking the current distance as the actual distance of the UAV.

In some examples, after act S26, the method further includes: S27, when the variance of the N-1 new moving velocities is greater than the second preset value, ignoring the current distance, and calculating an estimate value of a current position of the UVA according to a distance and a velocity measured last time, taking the estimate value of the current position as the actual distance of the UAV.

In some examples, the method further includes: when the number of continuous failure in measuring distances based on the sonar sensor is greater than the preset number of times, or the number of continuous measured noises is greater than the preset number, emptying the initial distance buffer queue and re-acquiring the initial distance buffer queue and the initial moving velocity buffer queue.

In some examples, the second preset value is twice as much as the first preset value.

In some examples, before act S11, the method further includes: measuring M continuous distances based on the sonar sensor, in which M is greater than N; extracting N greatest distances from the M distances, and obtaining the initial distance buffer queue and the initial moving velocity buffer queue according to the N greatest distances.

In some examples, after act S13, the method further includes: when the variance is greater than the first preset value, moving the first distance in the initial distance buffer queue out and moving a newest distance into the initial distance buffer queue until the variance is less than or equal to the first preset value.

Embodiments according to a second aspect of the present disclosure also provide an apparatus for filtering in ranging of an unmanned aerial vehicle. A sonar sensor in the UAV is configured for ranging. The apparatus includes: a measuring module, configured to acquire N continuous distances of the UVA based on a sonar sensor and to determine an initial distance buffer queue and an initial moving velocity buffer queue of the UAV according to the N distances, in which, N is an integer greater than 2; and a filtering module, configured to filter a current distance of UVA according to the initial distance buffer queue and the initial moving velocity buffer queue to obtain an actual distance of the UAV.

In an embodiment, the measuring module is configured to determine the initial distance buffer queue and the initial moving velocity buffer queue of the UAV according to the N continuous distances by acts of: obtaining N-1 moving velocities according to the N distances and calculating a difference level value of the N-1 moving velocities; determining whether each distance is valid according to the difference level value; when each distance is valid, constituting the initial distance buffer queue based on the N distances and constituting the initial moving velocity buffer queue based on the N-1 moving velocities.

In an embodiment, the difference level value includes a variance, the measuring module is configured to find derivatives of the N continuous distances with respect to time to obtain N-1 moving velocities of the UAV, in which the N continuous distances are measured in a preset time duration; calculate a variance of the N-1 moving velocities; determine whether the variance is less than or equal to a first preset value; and constitute the initial distance buffer queue based on the N distances and constitute the initial moving velocity buffer queue based on the N-1 moving velocities when the variance is less than or equal to the first preset value.

In an embodiment, the filtering module is configured to filter the current distance of the UVA according to the initial distance buffer queue and the initial moving velocity buffer queue to obtain the actual distance of the UAV by acts of: moving the first distance in the initial distance buffer queue out, finding derivatives of the N-1 remained distances and the current distance with respect to time to obtain the N-1 moving velocities; calculating a first variance of the N-1 moving velocities, and determining whether the first variance is less than or equal to a second preset value; when the first variance is less than or equal to the second preset value, replacing the first distance in the initial distance buffer queue by the current distance so as to update the initial distance buffer queue, and taking the current distance as the actual distance of the UAV.

Embodiments of the present disclosure also provide an unmanned aerial vehicle, which includes the apparatus for filtering in ranging of an unmanned aerial vehicle.

With the unmanned aerial vehicle and the apparatus for filtering in ranging of the UAV according to embodiments of the present disclosure, the initial distances measured by the sonar sensor are determined first, and then the derivatives of the initial distances are found to obtain the moving velocities of the UAV, and the variance of certain continuous velocities is calculated and it is determined whether the current distance is valid according to the variance, in which when the current distance satisfy a certain condition, the current distance is considered to be valid and the initial distances are updated; and when the current distance does not satisfy the certain condition, a distance is estimated and used as the current distance and the initial distances may be maintained. With the method, measurement noises of the sonar sensor in the UAV environment may be filtered, the filtering result may be satisfactory, and the measurement accuracy and stability of the sonar sensor are improved.

Moreover, the UAV and the apparatus for filtering in ranging of the UAV according to above embodiments of the present disclosure may have the following additional technical features.

In some examples, the filtering module is configured to, when the first variance is greater than the second preset value, move the N$^{th}$ distance in the initial distance buffer queue out, calculate a second variance according to the N-1 remained distances and the current distance, and configured to, when the second variance is less than or equal to a second preset value, replace the N$^{th}$ distance in the initial distance buffer queue by the current distance so as to update the initial distance buffer queue, and take the current distance as the actual distance of the UAV.

In some examples, the filtering module is further configured to, when the second variance is greater than the second preset value, add the current distance into a new buffer queue, and find derivatives of the new buffer queue with respect to time to obtain N-1 new moving velocities when the number of distances in the new buffer queue comes to N, and to calculate a variance of the N-1 new moving velocities, when the variance of the N-1 new moving velocities is less than or equal to the second preset value, replace the initial distance buffer queue by the new buffer queue, and take the current distance as the actual distance of the UAV.

In some examples, the filtering module is further configured to, when the variance of the N-1 new moving velocities is greater than the second preset value, ignore the current distance, obtain an estimate value of a current position of the UAV according to a distance and a velocity measured last time, and take the estimate value of the current position as the actual distance of the UAV.

In some examples, the measuring module is further configured to empty the initial distance buffer queue, and to re-acquire the initial distance buffer queue and the initial moving velocity buffer queue when the number of continuous failures in measuring distances by the sonar sensor is greater than the preset number of times, or the number of continuous measured noises is greater than the preset number.

In some examples, the first preset value is determined according to a maximum acceleration of the UAV. In some examples, the second preset value is twice as much as the first preset value.

In some examples, the measuring module is further configured to measure M continuous distances by the sonar sensor, in which M is greater than N; extract N greatest distances from the M distances, and obtain the initial distance buffer queue and the initial moving velocity buffer queue according to the N greatest distances.

In some examples, the filtering module is further configured to, when the variance obtained by the measuring module is greater than the first preset value, move the first distance in the initial distance buffer queue out and move a newest distance into the initial distance buffer queue until the variance is less than or equal to the first preset value.

According to embodiments of a third aspect of the present disclosure, a ranging method based on the method for filtering in ranging of a UAV is provided, which includes: acquiring M continuous distances by the sonar sensor in a preset time duration, and extracting N greatest distances from the M distances, in which, M is greater than N; determining the initial distance buffer queue and the initial moving velocity buffer queue according to the N distances; filtering the current distance according to the initial distance buffer queue and the initial moving velocity buffer queue to obtain the actual distance of the UAV.

With the ranging method based on the method for filtering in ranging of a UAV according to embodiments of the present disclosure, the initial distances measured by the sonar sensor are determined first, and then the derivatives of the initial distances are found to obtain the moving velocities of the UAV, and the variance of certain continuous velocities is calculated and it is determined whether the current distance is valid according to the variance, in which when the current distance satisfy a certain condition, the current distance is considered to be valid and the initial distances are updated; and when the current distance does not satisfy the certain condition, a distance is estimated and used as the current distance and the initial distances may be maintained. With the method, measurement noises of the sonar sensor in the UAV environment may be filtered, the filtering result may be satisfactory and the measurement accuracy and stability of the sonar sensor are improved.

According to embodiments of a fourth aspect of the present disclosure, an unmanned aerial vehicle is provided, which includes the apparatus for filtering in ranging of an unmanned aerial vehicle according to the embodiments of the second aspect of the present disclosure.

Additional aspects and advantages of embodiments of the present disclosure will be given in part in the following descriptions, become apparent in part from the following descriptions, or be learned from the practice of the embodiments of the present disclosure.

## BRIEF DESCRIPTION OF THE DRAWINGS

The above and/or other aspects and advantages of the present disclosure will become apparent and more readily appreciated from the following descriptions of the embodiments with reference to the drawings, in which:

Fig. 1 is an overall flow chart of a method for filtering in ranging of a UAV according to an embodiment of the present disclosure.

Fig. 2 is a detail flow chart of a method for filtering in ranging of a UAV according to an embodiment of the present disclosure.

Fig. 3 is a flow chart of a method for acquiring an initial distance buffer queue and an initial moving velocity buffer queue according to an embodiment of the present disclosure.

Fig. 4 is a schematic diagram illustrating distances of an UAV relative to ground according to an embodiment of the present disclosure.

Fig. 5 is a flow chart of a method for filtering a current distance of a UAV according to an embodiment of the present disclosure.

Fig. 6 is a block diagram illustrating a structure of an UAV according to an embodiment of the present disclosure.

Fig. 7 is a flow chart of a ranging method based on a method for filtering in ranging of a UAV according to an embodiment of the present disclosure.

## DETAILED DESCRIPTION

Reference will now be made in detail to exemplary embodiments, examples of which are illustrated in the accompanying drawings, wherein the same or similar elements and the elements having same or similar functions are denoted by like reference numerals throughout the descriptions. Embodiments described herein with reference to drawings are explanatory and used to generally understand the present disclosure, and shall not be construed to limit the present disclosure.

A method for filtering in ranging of a UAV, a UAV, and a ranging method based on aforesaid method for filtering in ranging of a UAV according to embodiments of the present disclosure will be described with reference to accompanying drawing as follows.

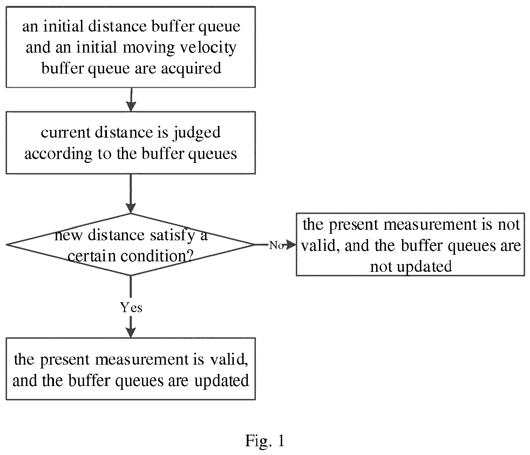

Fig. 1 is an overall flow chart of a method for filtering in ranging of a UAV according to an embodiment of the present disclosure. As shown in Fig. 1, the method in the present disclosure is generally based on a characteristic that velocities of the UAV change continuously during a moving process (for example, a climb, a decline or a horizontal movement). A current velocity of the UAV is obtained via seeking a difference of distances measured by a sonar sensor with respect to time. Then a variance of continuous velocities is calculated and it is determined whether a current distance is valid according to the variance. The general frame of the method is as follows. First, initial distances measured are acquired, i.e. the initial distance buffer queue and the initial moving velocity buffer queue are determined; secondly, it is determined whether a new distance measured is valid according to the initial distances. If the new distance satisfies a certain condition, the new distance is considered to be valid and the initial distances are updated according to the new distance; if the new distance does not satisfy the certain condition, a distance is estimated and used as the current distance and the initial distances are maintained. When experiencing a series of fail measurements or all the measured distances does not satisfy the certain condition, the initial distances should be re-acquired. It should be noticed that, the ranging described in the present disclosure may be refer to measuring a distance of the UAV relative to the ground via the sonar sensor provided on the bottom of the UAV, but the method according to embodiments of the present disclosure is not limited to measuring the distance relative to the ground, and the method according to embodiments of the present disclosure will be applicable as long as a sonar ranging is using in the UAV.

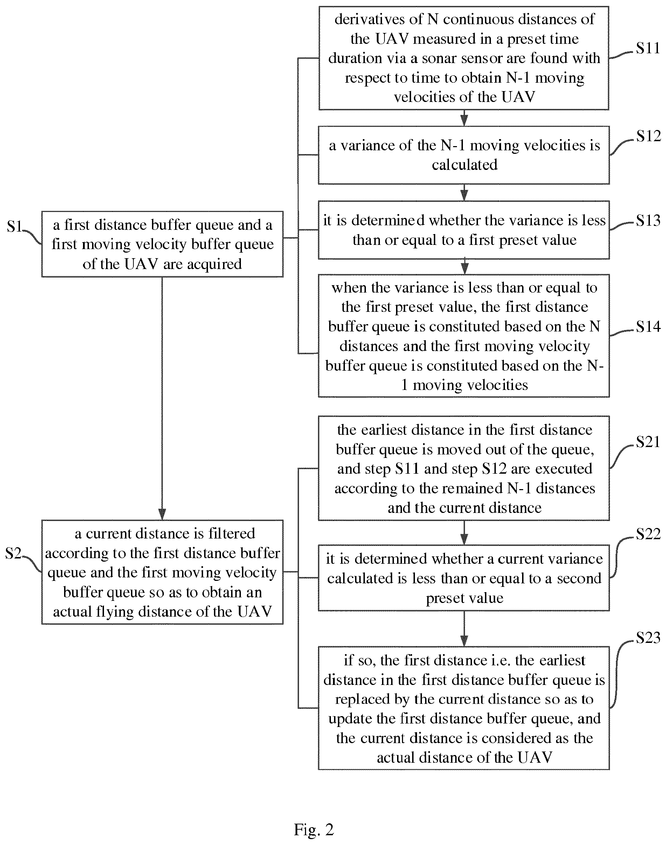

Fig. 2 is a detail flow chart of a method for filtering in ranging of a UAV according to an embodiment of the present disclosure. As shown in Fig. 2, the method includes steps S1 and S2.

At step S1, an initial distance buffer queue and an initial moving velocity buffer queue of the UAV are acquired.

In an embodiment, determining the initial distance buffer queue and the initial moving velocity buffer queue of the UAV according to the N distances includes: obtaining N-1 moving velocities according to the N distances and calculating a difference level value of the N-1 moving velocities; determining whether each distance is valid according to the difference level value; when each distance is valid, constituting the initial distance buffer queue based on the N distances and constituting the initial moving velocity buffer queue based on the N-1 moving velocities.

In an embodiment of the present disclosure, when the difference level value includes a variance, step S1 may include steps S11, S12, S13 and S14.

At step S11, derivatives of N continuous distances of the UAV measured in a preset time duration via a sonar sensor are found with respect to time to obtain N-1 moving velocities of the UAV.

At step S12, a variance of the N-1 moving velocities is calculated.

At step S13, it is determined whether the variance is less than or equal to a first preset value.

At step S14, when the variance is less than or equal to the first preset value, the initial distance buffer queue is constituted based on the N distances and the initial moving velocity buffer queue is constituted based on the N-1 moving velocities.

In an embodiment of the present disclosure, after step S13, the method may also include: when the variance is greater than the first preset value, moving the first distance in the initial distance buffer queue out from the queue and moving a newest distance measured into the initial distance buffer queue and returning to step S11 until the variance is less than or equal to the first preset value.

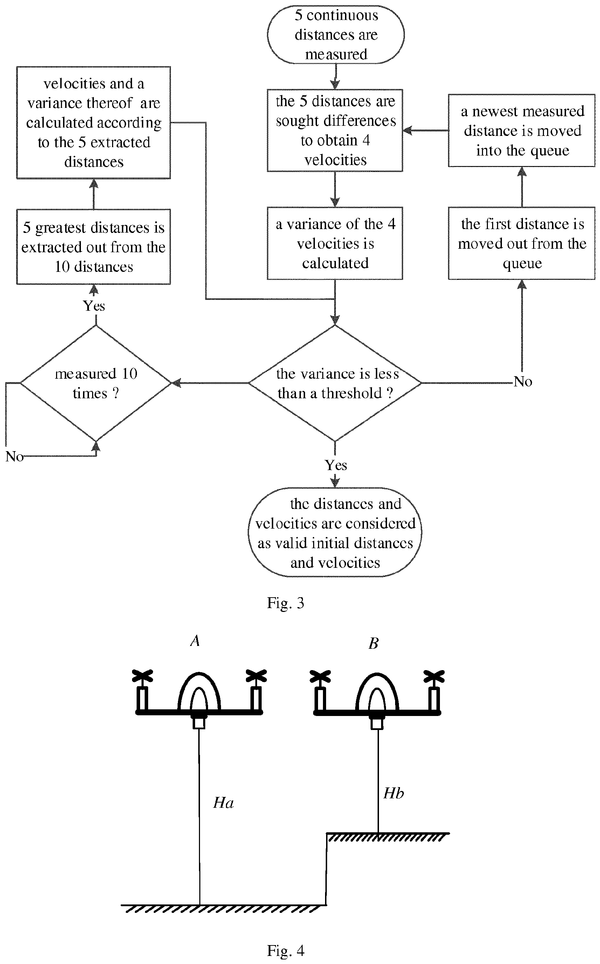

As a specific embodiment, the process of acquiring the initial distance buffer queue and the initial moving velocity buffer queue will be further illustrated with reference to Fig.3 as follows.

Embodiment 1

With reference to Fig. 3, N is 5 in this embodiment, for example. First, 5 continuous distances may be measured in the order of time to constitute a queue. When there is a failure in measuring, the distance corresponding to the failure is ignored and the measurement goes on until the 5 distances are measured in a preset time duration. When the number of distances measured in the preset time duration is less than 5, earlier distances may be deleted and the measurement goes on from a new time point until the number of the distances accumulates to 5 during the preset time duration. Then, derivatives of the 5 distances are found with respect to time to obtain 4 moving velocities. Then a variance of the 4 moving velocities is calculated. Since the velocities change continuously during a moving process, i.e. the inventors have found that it is not prone to step sudden change in the velocities, the variance of velocities in a short time duration approaches to zero. If the variance of the 4 continuous moving velocities is less than or equal to a first preset value T1, it may be assumed that there is no noise in the current 5 measurements, so the current 5 distances are used as the initial distance buffer queue for posterior filtering, and the current 4 velocities are used as the initial moving velocity buffer queue for posterior filtering. If the variance of the 4 continuous moving velocities is greater than the first preset value T1, it may be assumed that there is noise in the current 5 measurements, so the earliest (i.e. the first measured) distance is removed from the initial distance buffer queue, and a newest distance measured is moved into the initial distance buffer queue to obtain a new initial distance buffer queue, then derivatives of 5 distances in the new distance buffer queue are found with respect to time again to obtain 4 new velocities, and a variance of the 4 new velocities is compared to the first preset value T1. The above acts may be repeated until the variance is less than or equal to T1.

In an embodiment of the present disclosure, before step S11, the method may also include: measuring M continuous distances using a sonar sensor, in which M is greater than N; extracting N greatest distances from the M distances; and determining the initial distance buffer queue and the initial moving velocity buffer queue according to the N greatest distances. Details of the process will be described in specific embodiments with reference to Fig. 3 as follows.

Embodiment 2

In an embodiment of the present disclosure, a principle of sonar ranging is that, a wave in a certain frequency is emitted at an emission end, then the emitted wave will be reflected to a receiving end when runs into an obstacle, and the distance may be calculated by the receiving end via the time difference from emitting to receiving. During the ranging process, if a noise occurs before the reflecting, and the frequency of the noise is equal to that of the emitted wave, the measured data may be a noise; if a noise occurs after the reflecting, since the real reflected wave has already been received by the receiving end, the measurement result will not be affected by the noise; if a noise is overlapped or superposed with the reflected wave, the frequency of the reflected wave may be different from that of the emitted wave, thereby leading to a failed measurement. Besides, too long distance, too big inclination angle of the UAV, or absorption of the emitted wave on a reflection surface may also cause the reflected wave to not be received at the receiving end, and lead to a failed measurement. In practice, in most circumstances, noises occur before the reflecting and thus make a measured distance shorter than a real distance. If the real reflected wave is not received in the measuring process, and only noises with the same frequency as the emitted wave and with the same quantity as the emitted wave are received, the measured distance may be bigger or smaller than the real distance, but this kind of situation is quite rare. In summary, when using sonar ranging, noises usually cause the result smaller than the real distance, but no matter the noises cause the result bigger or smaller, as long as there are noises in the measured data, the variance of velocities is relatively great. Based on the above analysis and actual measurements, since noises will cause the measurement smaller than real distance in most circumstances, when determining the initial distances, if the initial distances and velocities cannot be obtained via the method described in embodiment 1 with 10 (i.e. M) continuous distance, this means that, out of the 10 measurements, there are less than 5 continuous distances which are correct. Then 5 (i.e. N) greatest data in the 10 data are selected and processed according to the method described in embodiment 1 to obtain the initial distance buffer queue and the initial moving velocity buffer queue.

In summary, there are two ways to determine the initial distance buffer queue and the initial moving velocity buffer queue as the two kinds of methods described in embodiment 1 and embodiment 2. In detail, the difference between the two methods is that, in the method described in embodiment 1, 5 continuously measured distances, in which noises cannot be involved in the distance data, are analyzed to obtain the initial distance buffer queue and the initial moving velocity buffer queue; while in the method described in embodiment 2, 5 greatest distances in the 10 distances are selected to be analyzed, when there are no noises involved in the 5 greatest distances, the initial distance buffer queue and the initial moving velocity buffer queue is obtained accordingly, the 5 distances does not have to be continuous. When using the two methods together, the initial distance buffer queue and the initial moving velocity buffer queue may be obtained as long as the conditions of one method are satisfied. In the view of practice, the method described in embodiment 1 is more suitable for measuring relatively shorter distance, and the method described in embodiment 2 is more suitable for measuring relatively longer distance. This is because that when the distance is relatively shorter, few noises are involved in the measurement results, the measured data may have better continuity and the possibility of continuous failure is quite small; while when the distance is relatively longer, continuity of the measured data may get worse and the continuous noises or measurement failures may occur.

At step S2, a current distance is filtered according to the initial distance buffer queue and the initial moving velocity buffer queue. In an embodiment, step S2 may include the following steps.

At step S21, the earliest distance in the initial distance buffer queue is moved out from the queue, and step S11 and step S12 are executed according to the remained N-1 distances and the current distance.

At step S22, it is determined whether a current variance calculated is less than or equal to a second preset value.

At step S23, if so, i.e. the current variance calculated is less than or equal to the second preset value, the first distance i.e. the earliest distance in the initial distance buffer queue is replaced by the current distance so as to update the initial distance buffer queue, and the current distance is considered as the actual distance of the UAV.

In an embodiment of the present disclosure, after step S22, the method further includes following steps.

At step S24, when the current variance calculated is greater than the second preset value, the $N^{th}$ distance i.e. the last distance in the initial distance buffer queue is moved out from the queue, step S11 and step S12 are executed according to the remained N-1 distances and the current distance, and it is determined whether a new variance calculated is less than or equal to the second preset value.

At step S25, when the new variance calculated in step S24 is less than or equal to the second preset value, then the $N^{th}$ distance in the initial distance buffer queue is replaced by the current distance so as to update the initial distance buffer queue, and the current distance is considered as the actual distance of the UAV.

In an embodiment, after step S24, the method may further include, for example, following steps.

At step S26, when the new variance calculated is greater than the second preset value, the current distance is added into the new buffer queue, and when the number of distances in the buffer queue comes to N, derivatives of the new buffer queue are found with respect to time for calculating N-1 new moving velocities corresponding to the new buffer queue and then a variance of the N-1 new moving velocities is calculated; when the variance of the N-1 new moving velocities is less than or equal to the second preset value, the initial distance buffer queue is replaced by the new buffer queue, and the current distance is considered as the actual distance of the UAV.

In an embodiment, after step S26, the method may further include, for example, following steps.

At step S27, when the variance of the N-1 new moving velocities is greater than the second preset value, the current distance is ignored, an estimate value of the current position is obtained according to a distance and a velocity measured last time, and the estimate value of the current position is considered as the actual distance of the UAV.

In some embodiments, the estimate value of the current position of the UAV is calculated, for example, via a following equation of:

$$d\_new = d\_pre + v\_pre * t,$$

in which, $d\_new$ is the estimate value of the current position of the UAV, $d\_pre$ is the distance measured last time, $v\_pre$ is the velocity measured last time, and t is a time duration from the last time to the current time.

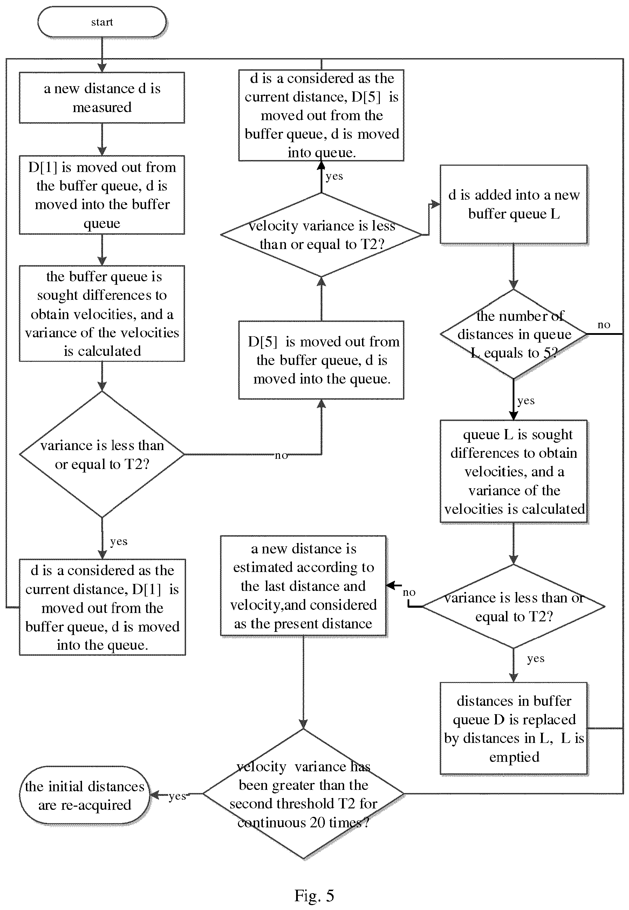

To make the present disclosure easier to appreciate, the process of filtering the current distance according to the above embodiments of the present disclosure will be described in detail in particular embodiments with reference to Fig. 4 and Fig. 5.

Embodiment 3

In detail, as shown in Fig. 5, the initial distance buffer queue and the initial moving velocity buffer queue are already obtained in embodiment 1 and embodiment 2. The obtained initial distance buffer queue is denoted as D including 5 distances D[1], D[2], ..., D[5] arranged in the order of time. Every time a new (current) distance d is measured, the first distance D[1] in the initial distance buffer queue, i. e. the earliest measured buffer data (distance) is moved out from the queue, and the new distance d is added into the queue to form a new queue, then derivatives of the 5 distances in the new queue are found with respect to time to obtain 4 velocities, and a variance of the 4 velocities is calculated.

When the variance is less than or equal to the second preset value, the current i.e. new distance d is valid, d is a considered as the current distance of the UAV, and the buffer queue is updated. When the variance of the 4 velocities is greater than the second current value T2, the inventors have found that there are three possible circumstances as follows.

1. The current distance is the real distance, and the last distance measured may be a noise. The noise is quite near to the real distance so that the last variance of the velocities is slightly less than the second preset value T2, and the current variance of the velocities is slightly greater than the second preset value T2.

2. There is a step sudden change in the measured distances, for example, as shown in Fig. 4, since the distances in the initial distance buffer queue are much more different from the current distance itself, the variance certainly will be greater than the second preset value T2.

3. The current distance is a noise, so that the variance is greater than the second preset value T2.

Different acts will be performed according to the above three circumstances in the present disclosure. In the first circumstance, because the last measured data may be a noise, i.e. D[5] in the initial distance buffer queue may be a noise, D[5] in the initial distance buffer queue is removed from the queue, a new queue is formed by buffer data D[1], D[2], D[3], D[4] and the current distance d, and a variance of velocities corresponding to the new queue is calculated. When the new variance calculated is less than the second preset value T2, D[5] in the initial distance buffer queue is replaced by the current distance d so as to update the initial distance buffer queue, and d is considered as the current distance of the UAV. When the new variance calculated is still greater than the second preset value T2, then it may be the second circumstance, for example, the UAV is moving from position A to position B, or moving from position B to position A in Fig. 4. Because of the sudden change of the real distance, when a new i.e. current measured distance is added into the initial distance buffer queue D, the variance calculated will always be greater than the second preset value T2. Therefore, the new measured distance d is added into a new buffer queue L, and a new position is estimated according to the last measured distance and the last velocity to be considered as the current position of the UAV, a kind of equation for calculation is as follows:

$$d\_new = d\_pre + v\_pre * t \qquad (1)$$

in which, d_*new* is the estimate value of the current position of the UAV *d_pre* is the last distance, *v_pre* is the velocity measured last time, and t is a time duration from the last time to the current time.

In an embodiment, when the number of distances in the new buffer queue reaches to 5, derivatives of the distances in the new buffer queue L are found with respect to time and a variance of corresponding velocities is calculated. When the variance calculated is less than the second preset value T2, the distances in the new buffer queue L are copied to the initial distance buffer queue D, and the current distance is considered as the current distance of the UAV. When the variance calculated according to the distances in the new buffer L queue and the variance calculated according to the distances in the initial distance buffer queue D are both greater than the second preset value T2, it may correspond to the third circumstance, i.e. the current distance is a noise, then the current distance is ignored, and a new distance is estimated according to the last measured distance and the last velocity, and considered as the current distance, for example as shown in equation (1). The distances in the initial distance buffer queue D are not updated, and L[1] in the new buffer queue L is removed from the queue, the current distance d is added into the queue, the current new buffer queue is equated to a process of relocating the initial position. Once data are added into the initial distance buffer queue D, and the variance calculated is less than the second preset value, then the new buffer queue L is emptied, a flow chart of an embodiment is shown in Fig. 5.

In an embodiment of the present disclosure, the method may further includes, the following actions. When the number of continuous failure in measuring distance based on the sonar sensor is greater than the preset number of times, or the number of continuous measured noises is greater than the preset number, the initial distance buffer queue is emptied, and the initial distance buffer queue and the initial moving velocity buffer queue are re-acquired. With reference to Fig. 5, the preset number of times is, for example, but not limited to, 20. That is to say, when the sonar sensor experiences 20 times continuous failed measurements or the number of continuous measured noises is greater than a preset value, the initial distance buffer queue is emptied, and the initial distance buffer queue and the initial moving velocity buffer queue are re-acquired according to the method described in embodiment 1 and embodiment 2.

In the above embodiments of the present disclosure, two thresholds T1 and T2 of the variance of the velocities are mentioned, in which, the first preset value T1 is a variance threshold for determining the initial position and the initial moving velocity, and the second preset value T2 is a threshold for filtering the current distance by the initial distances. Since the initial position and the initial moving velocity are very important for the posterior filtering in the method, the posterior filtering algorithm will be effective only if the initial position and the initial moving velocity are correct, thus the first preset value T1 is significant. While in an actual process, the height of the UAV may change frequently, or there may be ups and downs on the ground, thus there are fluctuations in the variance of the UAV in a short time duration, but the fluctuations are maintained in a certain range. In an embodiment of the present disclosure, for example, the first preset value is determined according to a maximum acceleration of the UAV, a kind of equation for calculation is as follows:

$$\mathrm{T1} < (a*t)^2,$$

in which, T1 is the first preset value, a is the maximum acceleration of the UAV, and t is the preset time duration.

In an embodiment, the second preset value T2 is twice as much as the first preset value T1.

With the method for filtering in ranging of a UAV according to embodiments of the present disclosure, the initial distances measured by the sonar sensor are determined first, and then the derivatives of the initial distances are found to obtain the moving velocities of the UAV, and the variance of certain continuous velocities is calculated and it is determined whether the current distance is valid according to the variance, in which when the current distance satisfy a certain condition, the current distance is considered to be valid and the initial distances are updated; and when the current distance does not satisfy the certain condition, a distance is estimated and used as the current distance and the initial distances may be maintained. With the embodiments of the present disclosure, measurement noises of the sonar sensor in the UAV environment may be filtered, the filtering result may be satisfactory, and the measurement accuracy and stability of the sonar sensor are improved.

Embodiments of the present disclosure also provide an unmanned aerial vehicle.

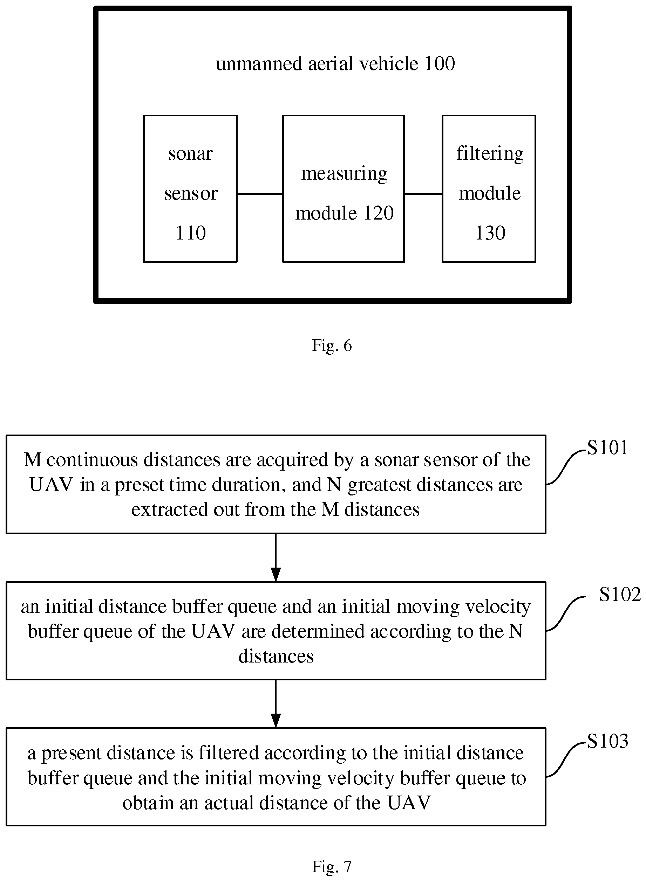

Fig. 6 is a block diagram illustrating a structure of an UAV according to an embodiment of the present disclosure. As shown in Fig.6, the unmanned aerial vehicle 100 includes a sonar sensor 110, a measuring module 120, and a filtering module 130.

The sonar sensor 110 is disposed on the UAV and configured for ranging (i.e. measuring a distance).

The measuring module 120 is configured to acquire an initial distance buffer queue and an initial moving velocity buffer queue of the UAV. In an embodiment, the measuring module 120 is configured to find derivatives of N continuous distances measured in a preset time duration via the sonar sensor with respect to time so as to obtain N-1 moving velocities of the UAV; calculate a variance of the N-1 moving velocities; determine whether the variance is less than or equal to a first preset value; and constitute an initial distance buffer queue based on the N distances and constitute an initial moving velocity buffer queue based on the N-1 moving velocities when the variance is less than or equal to the first preset value.

In an embodiment of the present disclosure, the measuring module 120 is configured to empty the initial distance buffer queue, and re-acquire the initial distance buffer queue and the initial moving velocity buffer queue when the number of continuous failures in measuring distances via the sonar sensor 110 is greater than the preset number of times, or the number of continuous measured noises is greater than the preset number.

Further, in some embodiments, the measuring module 120 is also configured to measure M continuous distances using the sonar sensor 110, in which M is greater than N; extract N greatest distances from the M distances; and obtain the initial distance buffer queue and the initial moving velocity buffer queue according to the N greatest distances.

The filtering module 130 is configured to filter a present distance according to the initial distance buffer queue and the initial moving velocity buffer queue to obtain an actual distance of the UAV. In an embodiment of the present disclosure, the filtering module 130 is configured to remove the first distance in the initial distance buffer queue out from the queue, find derivatives of the N-1 remained distances and the present distance with respect to time to obtain N-1 moving velocities; calculate a first variance of the N-1 moving velocities; determine whether the first variance is less than or equal to a second preset value; and also configured to, when the first variance is less than or equal to the second preset value, replace the first distance in the initial distance buffer queue by the present distance so as to update the initial distance buffer queue, and consider the present distance as the actual distance of the UAV.

In an embodiment of the present disclosure, the filtering module 130 is also configured to, when the first variance is greater than the second preset value, remove the $N^{th}$ distance in the initial distance buffer queue out from the queue, calculate a second variance according to the N-1 remained distances and the present distance, and configured to, when the second variance is less than or equal to a second preset value, replace the $N^{th}$ distance in the initial distance buffer queue by the present distance so as to update the initial distance buffer queue, and consider the present distance as the actual distance of the UAV.

In an embodiment of the present disclosure, the filtering module 130 is also configured to, when the second variance is greater than the second preset value, add the present distance into a new buffer queue, and find derivatives of the new buffer queue with respect to time to calculate a variance of N-1 corresponding moving velocities when the number of distances in the new buffer queue comes to N, and configured to, when the variance of the N-1 moving velocities is less than or equal to the second preset value, replace the initial distance buffer queue by the new buffer queue, and consider the present distance as the actual distance of the UAV.

In an embodiment of the present disclosure, the filtering module 130 is also configured to, when the variance of the N-1 moving velocities corresponding to the new buffer queue is greater than the second preset value, ignore the present distance, obtain an estimate value of the present position of the UAV according to a distance and a velocity measured last time, and consider the estimate value of the present position as the actual distance of the UAV.

In an embodiment, the present position of the UAV is calculated via the following equation of:

$$d\_new = d\_pre + v\_pre * t,$$

in which, *d_new* is the estimate value of the present position of the UAV, *d_pre* is the distance measured last time, *V_pre* is the velocity measured last time, and t is a time duration from the last time to the current time.

In an embodiment of the present disclosure, the filtering module 130 is also configured to, when the variance obtained by the measuring module 120 is greater than the first preset value, move the first distance in the initial distance buffer queue out from the queue and move a newest distance into the initial distance buffer queue to determine the initial distance buffer queue and the initial moving velocity buffer queue until the variance is less than or equal to the first preset value.

In an embodiment of the present disclosure, for example, the first preset value is determined according to a maximum acceleration of the UAV, in which,

$$T1 < (a*t)^2,$$

in which, T1 is the first preset value, a is the maximum acceleration of the UAV, and t is the preset time duration.

In an embodiment, the second preset value is twice as much as the first preset value T1.

It should be noted that since the UAV according to embodiments of the present disclosure may be realized in similar ways with the method for filtering in ranging of a UAV according to the embodiments of the present disclosure, the details may be found with reference to the method parts, and thus will not be elaborated here so as to reduce redundancy.

With the UAV according to embodiments of the present disclosure, the initial distances measured by the sonar sensor are determined first, and then the derivatives of the initial distances are found to obtain the moving velocities of the UAV, and the variance of certain continuous velocities is calculated and it is determined whether the current distance is valid according to the variance, in which when the current distance satisfy a certain condition, the current distance is considered to be valid and the initial distances are updated; and when the current distance does not satisfy the certain condition, a distance is estimated and used as the current distance and the initial distances may be maintained. With the embodiments of the present disclosure, measurement noises of the sonar sensor in the UAV environment may be filtered, the filtering result may be satisfactory, and the measurement accuracy and stability of the sonar sensor are improved.

Embodiments of the present disclosure also provide a ranging method based on the method for filtering in ranging of a UAV according to above embodiments of the present disclosure.

Fig. 7 is a flow chart illustrating a ranging method based on a method for filtering in ranging of a UAV according to an embodiment of the present disclosure. As shown in Fig. 7, the method includes following steps.

At step S101, M continuous distances are acquired by a sonar sensor of the UAV in a preset time duration, and N greatest distances are extracted out from the M distances, in which, M is greater than N.

At step S102, an initial distance buffer queue and an initial moving velocity buffer queue of the UAV are determined according to the N distances.

At step S103, a present distance is filtered according to the initial distance buffer queue and the initial moving velocity buffer queue to obtain an actual distance of the UAV.

It should be understood that, since the ranging method based on a method for filtering in ranging of a UAV according to embodiments of the present disclosure is provided based on the method for filtering in ranging of a UAV according to above embodiments of the present disclosure, the ranging method based on a method for filtering in ranging of a UAV may be realized in similar ways with the method for filtering in ranging of a UAV according to the embodiments of the present disclosure, the details may be found with reference to the descriptions of the method for filtering in ranging of a UAV, and thus will not be elaborated here so as to reduce redundancy.

With the ranging method base on a method for filtering in ranging of a UAV according to embodiments of the present disclosure, the initial distances measured by the sonar sensor are determined first, and then the derivatives of the initial distances are found to obtain the moving velocities of the UAV, and the variance of certain continuous velocities is calculated and it is determined whether the current distance is valid according to the variance, in which when the current distance satisfy a certain condition, the current distance is considered to be valid and the initial distances are updated; and when the current distance does not satisfy the certain condition, a distance is estimated and used as the current distance and the initial distances may be maintained. With the embodiments of the present disclosure, measurement noises of the sonar sensor in the UAV environment may be filtered, the filtering result may be satisfactory and the measurement accuracy and stability of the sonar sensor are improved.

In the specification of the present disclosure, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," and "circumference" should be construed to refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure.

In addition, terms such as "first" and "second" are used herein only for purposes of description and are not intended to indicate or imply relative importance or significance or to imply the number of indicated technical features. Thus, the feature defined with "first" and "second" may comprise one or more of this feature either in a way of imply or indicate. In the description of the present disclosure, "a plurality of" means two or more than two, for example, two, three etc. unless specifically and particularly prescribed otherwise.

In the present invention, unless specified or limited otherwise, the terms "mounted", "connected", "coupled", "fixed" and the like are used broadly, and may be, for example, fixed connections, detachable connections, or integral connections; may also be mechanical or electrical connections; may also be direct connections or indirect connections via intervening structures; may also be inner communications of two elements, or interactions of two elements, unless specified otherwise. The particular meanings of above terms can be understood by those skilled in the art according to specific situations.

In the present invention, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature. While a first feature "below," "under," or "on bottom of" a second feature may include an embodiment in which the first feature is right or obliquely "below," "under," or "on bottom of" the second feature, or just means that the first feature is at a height lower than that of the second feature.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. In this specification, exemplary descriptions of aforesaid terms are not necessarily referring to the same embodiment or example. Furthermore, the particular features, structures, materials, or characteristics may be combined in any suitable manner in one or more embodiments or examples. In addition, those skilled in the art could combine or associate different embodiments, examples or characters of different embodiments or examples, as long as there are no contradictories.

Although embodiments of present disclosure have been shown and described above, it should be understood that above embodiments are just explanatory, and cannot be construed to limit the present disclosure.

**Claims**

1. A method for filtering in ranging of an unmanned aerial vehicle UAV, comprising:

   acquiring N continuous distances of the UAV based on a sonar sensor (110) and determining an initial distance buffer queue and an initial moving velocity buffer queue of the UAV according to the N distances, wherein, N is an integer greater than 2;
   filtering a current distance of the UAV measured based on the sonar sensor (110), according to the initial distance buffer queue and the initial moving velocity buffer queue to obtain an actual distance of the UAV;
   wherein determining the initial distance buffer queue and the initial moving velocity buffer queue of the UAV according to the N distances comprises:

      obtaining N-1 moving velocities according to the N distances and calculating a difference level value of the N-1 moving velocities;
      determining whether each distance is valid according to the difference level value;
      when each distance is valid, constituting the initial distance buffer queue based on the N distances and constituting the initial moving velocity buffer queue based on the N-1 moving velocities.

2. The method according to claim 1, wherein, the difference level value comprises a variance, and determining the initial distance buffer queue and the initial moving velocity buffer queue of the UAV according to the N distances comprises:

      S11, finding derivatives of the N continuous distances with respect to time to obtain N-1 moving velocities of the UAV, wherein the N continuous distances are measured in a preset time duration;
      S12, calculating a variance of the N-1 moving velocities;
      S13, determining whether the variance is less than or equal to a first preset value; preferably, the first preset value is determined according to a maximum acceleration of the UAV;
      S14, when the variance is less than or equal to the first preset value, constituting the initial distance buffer queue based on the N distances and constituting the initial moving velocity buffer queue based on the N-1 moving velocities.

3. The method according to claim 2, wherein, filtering the current distance of the UAV measured based on the sonar sensor (110) according to the initial distance buffer queue and the initial moving velocity buffer queue to obtain the actual distance of the UAV comprises:

      S21, moving the first distance in the initial distance buffer queue out, and executing acts S11 to S12 according to the remained N-1 distances and the current distance;
      S22, determining whether the current variance calculated is less than or equal to a second preset value;
      S23, when the current variance calculated is less than or equal to the second preset value, replacing the first distance in the initial distance buffer queue by the current distance so as to update the initial distance buffer queue, and taking the current distance as the actual distance of the UAV.

4. The method according to claim 3, wherein, after act S22, the method further comprises:

      S24, when the current variance calculated is greater than the second preset value, moving the $N^{th}$ distance in the initial distance buffer queue out, and executing acts S11 and S12 according to the remained N-1 distances and the current distance; and determining whether the current variance calculated is less than or equal to the second preset value;

S25, when the current variance calculated is less than or equal to the second preset value, replacing the $N^{th}$ distance in the initial distance buffer queue by the current distance so as to update the initial distance buffer queue, and taking the current distance as the actual distance of the UAV.

5. The method according to claim 4, wherein, after act S24, the method further comprises:

S26, when the current variance calculated is greater than the second preset value, adding the current distance into a new buffer queue, and when the number of distances in the new buffer queue comes to N, finding derivatives of the new buffer queue with respect to time to obtain N-1 new moving velocities and calculating a variance of the N-1 new moving velocities; when the variance of the N-1 new moving velocities is less than or equal to the second preset value, replacing the initial distance buffer queue by the new buffer queue, and taking the current distance as the actual distance of the UAV;

preferably, S27, when the variance of the N-1 new moving velocities is greater than the second preset value, ignoring the current distance, and calculating an estimate value of a current position of the UAV according to a distance and a velocity measured last time, and taking the estimate value of the current position as the actual distance of the UAV.

6. The method according to any one of claims 2 to 5, wherein, before act S11, the method further comprises:

measuring M continuous distances based on the sonar sensor (110), wherein, M is greater than N;
extracting N greatest distances from the M distances, and obtaining the initial distance buffer queue and the initial moving velocity buffer queue according to the N greatest distances.

7. An apparatus for filtering in ranging of an unmanned aerial vehicle UAV, wherein, a sonar sensor (110) in the UAV is configured for ranging, and the apparatus comprises:

a measuring module (120), configured to acquire N continuous distances of the UAV based on a sonar sensor (110) and to determine an initial distance buffer queue and an initial moving velocity buffer queue of the UAV according to the N distances, wherein, N is an integer greater than 2; and
a filtering module (130), configured to filter a current distance of the UAV measured based on the sonar sensor (110) according to the initial distance buffer queue and the initial moving velocity buffer queue to obtain an actual distance of the UAV;
wherein the measuring module (120) is configured to determine the initial distance buffer queue and the initial moving velocity buffer queue of the UAV according to the N continuous distances by acts of: obtaining N-1 moving velocities according to the N distances and calculating a difference level value of the N-1 moving velocities; determining whether each distance is valid according to the difference level value; when each distance is valid, constituting the initial distance buffer queue based on the N distances and constituting the initial moving velocity buffer queue based on the N-1 moving velocities.

8. The apparatus according to claim 7, wherein, the difference level value comprises a variance, and the measuring module (120) is configured to find derivatives of the N continuous distances with respect to time to obtain N-1 moving velocities of the UAV, wherein the N continuous distances are measured in a preset time duration; calculate a variance of the N-1 moving velocities; determine whether the variance is less than or equal to a first preset value; and constitute the initial distance buffer queue based on the N distances and constitute the initial moving velocity buffer queue based on the N-1 moving velocities when the variance is less than or equal to the first preset value, preferably, the first preset value is determined according to a maximum acceleration of the UAV.

9. The apparatus according to claim 8, wherein, the filtering module (130) is configured to filter the current distance of the UAV measured based on the sonar sensor (110) according to the initial distance buffer queue and the initial moving velocity buffer queue to obtain the actual distance of the UAV by acts of: moving the first distance in the initial distance buffer queue out, finding derivatives of the N-1 remained distances and the current distance with respect to time to obtain the N-1 moving velocities; calculating a first variance of the N-1 moving velocities; and determining whether the first variance is less than or equal to a second preset value; when the first variance is less than or equal to the second preset value, replacing the first distance in the initial distance buffer queue by the current distance so as to update the initial distance buffer queue, and taking the current distance as the actual distance of the UAV.

10. The apparatus according to claim 9, wherein, the filtering module (130) is further configured to, when the first variance is greater than the second preset value, move the $N^{th}$ distance in the initial distance buffer queue out, calculate a second variance according to the N-1 remained distances and the current distance, and configured to, when the second variance is less than or equal to a second preset value, replace the $N^{th}$ distance in the initial distance buffer queue by the current distance so as to update the initial distance buffer queue, and take the current distance as the actual distance of the UAV.

11. The apparatus according to claim 10, wherein, the filtering module (130) is further configured to, when the second variance is greater than the second preset value, add the current distance into a new buffer queue, and find derivatives of the new buffer queue with respect to time to obtain N-1 new moving velocities when the number of distances in the new buffer queue comes to N, and to calculate a variance of the N-1 new moving velocities, when the variance of the N-1 new moving velocities is less than or equal to the second preset value, replace the initial distance buffer queue by the new buffer queue, and take the current distance as the actual distance of the UAV; and
preferably, the filtering module (130) is further configured to, when the variance of the N-1 new moving velocities is greater than the second preset value, ignore the current distance, obtain an estimate value of a current position of the UAV according to a distance and a velocity measured last time, and take the estimate value of the current position as the actual distance of the UAV.

12. The apparatus according to any one of claims 7 to 11, wherein, the measuring module (120) is further configured to measure M continuous distances by the sonar sensor (110), in which M is greater than N; extract N greatest distances from the M distances; and obtain the initial distance buffer queue and the initial moving velocity buffer queue according to the N greatest distances.

13. An unmanned aerial vehicle, comprising the apparatus for filtering in ranging of an unmanned aerial vehicle according to any one of claims 7 to 12.


**Patentansprüche**

1. Verfahren zum Filtern der Entfernungsmessung eines unbemannten Luftfahrzeugs (UAV), umfassend:

Erfassen von N kontinuierlichen Entfernungen des UAV auf der Grundlage eines Sonarsensors (110) und Bestimmen einer anfänglichen Entfernungspuffer-Warteschlange und einer anfänglichen Bewegungsgeschwindigkeitspuffer-Warteschlange des UAV gemäß den N Entfernungen, wobei N eine ganze Zahl größer als 2 ist;
Filtern einer aktuellen Entfernung des UAV, die auf der Grundlage des Sonarsensors (110) gemessen wurde, gemäß der anfänglichen Entfernungspuffer-Warteschlange und der anfänglichen Bewegungsgeschwindigkeitspuffer-Warteschlange, um eine tatsächliche Entfernung des UAV zu erhalten;
wobei das Bestimmen der anfänglichen Entfernungspuffer-Warteschlange und der anfänglichen Bewegungsgeschwindigkeitspuffer-Warteschlange des UAV gemäß den N Entfernungen umfasst:

Erhalten von N-1 Bewegungsgeschwindigkeiten gemäß den N Entfernungen und Berechnen eines Differenzniveauwertes der N-1 Bewegungsgeschwindigkeiten;
Bestimmen, ob jede Entfernung gemäß dem Differenzniveauwert gültig ist;

wenn jede Entfernung gültig ist, Bilden der anfänglichen Entfernungspuffer-Warteschlange auf der Basis der N Entfernungen und Bilden der anfänglichen Bewegungsgeschwindigkeitspuffer-Warteschlange auf der Basis der N-1 Bewegungsgeschwindigkeiten.

2. Verfahren nach Anspruch 1, wobei der Wert des Differenzniveaus eine Abweichung aufweist, und das Bestimmen der anfänglichen Entfernungspuffer-Warteschlange und der anfänglichen Bewegungsgeschwindigkeitspuffer-Warteschlange des UAV gemäß den N Entfernungen umfasst:

S11, Finden von Ableitungen der N kontinuierlichen Entfernungen in Bezug auf die Zeit, um N-1 Bewegungsgeschwindigkeiten des UAV zu erhalten, wobei die N kontinuierlichen Entfernungen in einer voreingestellten Zeitdauer gemessen werden;
S12, Berechnen einer Abweichung der N-1 Bewegungsgeschwindigkeiten;
S13, Bestimmen, ob die Abweichung kleiner oder gleich einem ersten voreingestellten Wert ist;
vorzugsweise wird der erste voreingestellte Wert entsprechend einer maximalen Beschleunigung des UAV bestimmt;
S14, wenn die Abweichung kleiner oder gleich dem ersten voreingestellten Wert ist, Bilden der anfänglichen Entfernungspuffer-Warteschlange auf der Basis der N Entfernungen und Bilden der anfänglichen Bewegungsgeschwindigkeitspuffer-Warteschlange auf der Basis der N-1 Bewegungsgeschwindigkeiten.

3. Verfahren nach Anspruch 2, wobei das Filtern der aktuellen Entfernung des UAV, die auf der Grundlage des Sonarsensors (110) gemessen wurde, gemäß der anfänglichen Entfernungspuffer-Warteschlange und der anfänglichen Bewegungsgeschwindigkeitspuffer-Warteschlange, um die tatsächliche Entfernung des UAV zu erhalten, Folgendes umfasst:

S21, Verschieben der ersten Entfernung in der anfänglichen Entfernungspuffer-Warteschlange nach außen und Ausführen der Handlungen S11 bis S12 in Abhängigkeit von den verbleibenden N-1 Entfernungen und der aktuellen Entfernung;
S22, Bestimmen, ob die aktuell berechnete Abweichung kleiner oder gleich einem zweiten voreingestellten Wert ist;
S23, wenn die berechnete aktuelle Abweichung kleiner oder gleich dem zweiten voreingestellten Wert ist, Ersetzen der ersten Entfernung in der anfänglichen Entfernungspuffer-Warteschlange durch die aktuelle Entfernung, um die anfängliche Entfernungspuffer-Warteschlange zu aktualisieren, und Verwenden der aktuellen Entfernung als die tatsächliche Entfernung des UAV.

4. Verfahren nach Anspruch 3, wobei das Verfahren nach der Handlung S22 weiterhin umfasst:

S24, wenn die aktuell berechnete Abweichung größer als der zweite voreingestellte Wert ist, Verschieben der N-ten Entfernung in der anfänglichen Entfernungspuffer-Warteschlange nach außen, und Ausführen der Handlungen S11 und S12 gemäß den verbliebenen N-1 Entfernungen und der aktuellen Entfernung; und Bestimmen, ob die aktuell berechnete Abweichung kleiner oder gleich dem zweiten voreingestellten Wert ist; S25, wenn die berechnete aktuelle Abweichung kleiner oder gleich dem zweiten voreingestellten Wert ist, Ersetzen der N-ten Entfernung in der anfänglichen Entfernungspuffer-Warteschlange durch die aktuelle Entfernung, um die anfängliche Entfernungspuffer-Warteschlange zu aktualisieren, und Verwenden der aktuellen Entfernung als die tatsächliche Entfernung des UAV.

5. Verfahren nach Anspruch 4, wobei das Verfahren nach der Handlung S24 weiterhin umfasst:

S26, wenn die berechnete aktuelle Abweichung größer als der zweite voreingestellte Wert ist, Hinzufügen der aktuellen Distanz zu einer neuen Pufferwarteschlange, und wenn die Anzahl der Distanzen in der neuen Pufferwarteschlange N beträgt, Finden von Ableitungen der neuen Pufferwarteschlange in Bezug auf die Zeit, um N-1 neue Bewegungsgeschwindigkeiten zu erhalten, und Berechnen einer Abweichung der N-1 neuen Bewegungsgeschwindigkeiten;
wenn die Abweichung der N-1 neuen Bewegungsgeschwindigkeiten kleiner oder gleich dem zweiten voreingestellten Wert ist, Ersetzen der anfänglichen Entfernungspuffer-Warteschlange durch die neue Puffer-Warteschlange und Verwenden der aktuellen Entfernung als die tatsächliche Entfernung des UAV;
vorzugsweise S27, wenn die Abweichung der N-1 neuen Bewegungsgeschwindigkeiten größer als der zweite voreingestellte Wert ist, Ignorieren der aktuellen Entfernung und Berechnen eines Schätzwertes einer aktuellen Position des UAV gemäß einer Entfernung und einer Geschwindigkeit, die beim letzten Mal gemessen wurden, und Verwenden des Schätzwertes der aktuellen Position als die tatsächliche Entfernung des UAV.

6. Verfahren nach einem der Ansprüche 2 bis 5, wobei das Verfahren vor der Handlung S11 ferner umfasst:

Messen von M kontinuierlichen Entfernungen auf der Basis des Sonarsensors (110), wobei M größer als N ist; Extrahieren von N größten Entfernungen aus den M Entfernungen und Erhalten der anfänglichen Entfernungspuffer-Warteschlange und der anfänglichen Bewegungsgeschwindigkeitspuffer-Warteschlange gemäß den N größten Entfernungen.

7. Vorrichtung zum Filtern bei der Entfernungsmessung eines unbemannten Luftfahrzeugs (UAV), wobei ein Sonarsensor (110) in dem UAV für die Entfernungsmessung konfiguriert ist, und die Vorrichtung aufweist:

ein Messmodul (120), das so konfiguriert ist, dass es N kontinuierliche Entfernungen des UAV auf der Grundlage eines Sonarsensors (110) erfasst und eine anfängliche Entfernungspuffer-Warteschlange und eine anfängliche Bewegungsgeschwindigkeitspuffer-Warteschlange des UAV gemäß den N Entfernungen bestimmt, wobei N eine ganze Zahl größer als 2 ist;

und ein Filterungsmodul (130), das so konfiguriert ist, dass es eine aktuelle Entfernung des UAV, die auf der Grundlage des Sonarsensors (110) gemessen wurde, gemäß der anfänglichen Entfernungspuffer-Warteschlange und der anfänglichen Bewegungsgeschwindigkeitspuffer-Warteschlange filtert, um eine tatsächliche Entfernung des UAV zu erhalten;

wobei das Messmodul (120) so konfiguriert ist, dass es die anfängliche Entfernungspuffer-Warteschlange und die anfängliche Bewegungsgeschwindigkeitspuffer-Warteschlange des UAV gemäß den N kontinuierlichen Entfernungen durch folgende Handlungen bestimmt:

Erhalten von N-1 Bewegungsgeschwindigkeiten gemäß den N Entfernungen und Berechnen eines Differenzniveauwertes der N-1 Bewegungsgeschwindigkeiten;
Bestimmen, ob jede Entfernung gemäß dem Differenzniveauwert gültig ist;

wenn jede Entfernung gültig ist, Bilden der anfänglichen Entfernungspuffer-Warteschlange auf der Basis der N Entfernungen und Bilden der anfänglichen Bewegungsgeschwindigkeitspuffer-Warteschlange auf der Basis der N-1 Bewegungsgeschwindigkeiten.

8. Vorrichtung nach Anspruch 7, wobei der Wert des Differenzniveaus eine Abweichung aufweist und das Messmodul (120) so konfiguriert ist, dass es Ableitungen der N kontinuierlichen Entfernungen in Bezug auf die Zeit findet, um N-1 Bewegungsgeschwindigkeiten des UAV zu erhalten, wobei die N kontinuierlichen Entfernungen in einer voreingestellten Zeitdauer gemessen werden;

Berechnen einer Abweichung der N-1 Bewegungsgeschwindigkeiten;
Bestimmen, ob die Abweichung kleiner als oder gleich einem ersten voreingestellten Wert ist;
und Bilden der anfänglichen Entfernungspuffer-Warteschlange auf der Grundlage der N Entfernungen und Bilden der anfänglichen Bewegungsgeschwindigkeitspuffer-Warteschlange auf der Grundlage der N-1 Bewegungsgeschwindigkeiten, wenn die Abweichung kleiner oder gleich dem ersten voreingestellten Wert ist, wobei der erste voreingestellte Wert vorzugsweise gemäß einer maximalen Beschleunigung des UAV bestimmt wird.

9. Vorrichtung nach Anspruch 8, wobei das Filtermodul (130) so konfiguriert ist, dass es die aktuelle Entfernung des UAV, die auf der Grundlage des Sonarsensors (110) gemessen wurde, gemäß der anfänglichen Entfernungspuffer-Warteschlange und der anfänglichen Bewegungsgeschwindigkeitspuffer-Warteschlange filtert, um die tatsächliche Entfernung des UAV durch folgende Handlungen zu erhalten:

Verschieben der ersten Entfernung in der anfänglichen Entfernungspuffer-Warteschlange nach außen, Finden von Ableitungen der N-1 verbliebenen Entfernungen und der aktuellen Entfernung in Bezug auf die Zeit, um die N-1 Bewegungsgeschwindigkeiten zu erhalten;
Berechnen einer ersten Abweichung der N-1 Bewegungsgeschwindigkeiten;
und Bestimmen, ob die erste Abweichung kleiner oder gleich einem zweiten voreingestellten Wert ist;
wenn die erste Abweichung kleiner oder gleich dem zweiten voreingestellten Wert ist, Ersetzen der ersten Entfernung in der anfänglichen Entfernungspuffer-Warteschlange durch die aktuelle Entfernung, um die anfängliche Entfernungspuffer-Warteschlange zu aktualisieren, und Verwenden der aktuellen Entfernung als die tatsächliche Entfernung des UAV.

10. Vorrichtung nach Anspruch 9, wobei das Filtermodul (130) ferner so konfiguriert ist, dass es, wenn die erste Abweichung größer als der zweite voreingestellte Wert ist, die N-te Entfernung in der anfänglichen Entfernungspuffer-Warteschlange nach außen verschiebt, eine zweite Abweichung gemäß den N-1 verbliebenen Entfernungen und der aktuellen Entfernung berechnet, und so konfiguriert ist, dass es, wenn die zweite Abweichung kleiner oder gleich einem zweiten voreingestellten Wert ist, die N-te Entfernung in der anfänglichen Entfernungspuffer-Warteschlange durch die aktuelle Entfernung ersetzt, um die anfängliche Entfernungspuffer-Warteschlange zu aktualisieren, und die aktuelle Entfernung als die tatsächliche Entfernung des UAV nimmt.

11. Vorrichtung nach Anspruch 10, wobei das Filtermodul (130) ferner so konfiguriert ist, dass es, wenn die zweite Abweichung größer als der zweite voreingestellte Wert ist, die aktuelle Distanz zu einer neuen Pufferwarteschlange hinzufügt und Ableitungen der neuen Pufferwarteschlange in Bezug auf die Zeit findet, um N-1 neue Bewegungsgeschwindigkeiten zu erhalten, wenn die Anzahl der Distanzen in der neuen Pufferwarteschlange N beträgt, und eine Abweichung der N-1 neuen Bewegungsgeschwindigkeiten zu berechnen, wenn die Abweichung der N-1 neuen Bewegungsgeschwindigkeiten kleiner oder gleich dem zweiten voreingestellten Wert ist, die anfängliche Entfernungspuffer-Warteschlange durch die neue Puffer-Warteschlange zu ersetzen und die aktuelle Entfernung als die tatsächliche Entfernung des UAV zu nehmen;

und vorzugsweise ist das Filtermodul (130) ferner so konfiguriert, dass es, wenn die Abweichung der N-1 neuen Bewegungsgeschwindigkeiten größer als der zweite voreingestellte Wert ist, die aktuelle Entfernung ignoriert, einen Schätzwert einer aktuellen Position des UAV gemäß einer Entfernung und einer zuletzt gemessenen Geschwindigkeit erhält und den Schätzwert der aktuellen Position als die tatsächliche Entfernung des UAV annimmt.

12. Vorrichtung nach einem der Ansprüche 7 bis 11, wobei das Messmodul (120) ferner so konfiguriert ist, dass es M kontinuierliche Entfernungen durch den Sonarsensor (110) misst, wobei M größer als N ist;

die N größten Entfernungen aus den M Entfernungen extrahiert;
und die anfängliche Entfernungspuffer-Warteschlange und die anfängliche Bewegungsgeschwindigkeitspuffer-Warteschlange gemäß den N größten Entfernungen erhält.

13. Unbemanntes Luftfahrzeug, umfassend die Vorrichtung zur Filterung der Entfernungsmessung eines unbemannten Luftfahrzeugs nach einem der Ansprüche 7 bis 12.

## Revendications

1. Procédé de filtrage pour mesurer la distance d'un véhicule aérien sans pilote UAV, comprenant les actions consistant à :

acquérir N distances continues de l'UAV sur la base d'un capteur sonar (110) et déterminer une file d'attente tampon initiale de distances et une file d'attente tampon initiale de vitesses de déplacement de l'UAV en fonction des N distances, dans lequel N est un nombre entier supérieur à 2 ;
filtrer une distance actuelle de l'UAV mesurée sur la base du capteur sonar (110), en fonction de la file d'attente tampon initiale de distances et de la file d'attente tampon initiale de vitesses de déplacement pour obtenir une distance réelle de l'UAV ;
dans lequel la détermination de la file d'attente tampon initiale de distances et de la file d'attente tampon initiale de vitesses de déplacement de l'UAV en fonction des N distances comprend les actions consistant à :

obtenir N-1 vitesses de déplacement en fonction des N distances et calculer une valeur de niveau de différence des N-1 vitesses de déplacement ;
déterminer si chaque distance est valide en fonction de la valeur de niveau de différence ;
lorsque chaque distance est valide, constituer la file d'attente tampon initiale de distances sur la base des N distances et constituer la file d'attente tampon initiale de vitesses de déplacement sur la base des N-1 vitesses de déplacement.

2. Procédé selon la revendication 1, dans lequel la valeur de niveau de différence comprend une variance et la détermination de la file d'attente tampon initiale de distances et de la file d'attente tampon initiale de vitesses de déplacement de l'UAV en fonction des N distances comprend les actions consistant à :

S11, trouver les dérivées des N distances continues par rapport au temps pour obtenir N-1 vitesses de déplacement de l'UAV, dans lequel les N distances continues sont mesurées dans une durée de temps prédéfinie ;
S12, calculer une variance des N-1 vitesses de déplacement ;
S13, déterminer si la variance est inférieure ou égale à une première valeur prédéfinie ; de préférence, la première valeur prédéfinie est déterminée en fonction d'une accélération maximale de l'UAV ;
S14, lorsque la variance est inférieure ou égale à la première valeur prédéfinie, constituer la file d'attente tampon initiale de distances sur la base des N distances et constituer la file d'attente tampon initiale de vitesses de déplacement sur la base des N-1 vitesses de déplacement.

3. Procédé selon la revendication 2, dans lequel le filtrage de la distance actuelle de l'UAV mesurée sur la base du capteur sonar (110) en fonction de la file d'attente tampon initiale de distances et de la file d'attente tampon initiale de vitesses de déplacement pour obtenir la distance réelle de l'UAV comprend les actions consistant à :

S21, sortir la première distance de la file d'attente tampon initiale de distances et exécuter les actions S11 à S12 en fonction des N-1 distances restantes et de la distance actuelle ;

S22, déterminer si la variance actuelle calculée est inférieure ou égale à une seconde valeur prédéfinie ;

S23, lorsque la variance actuelle calculée est inférieure ou égale à la seconde valeur prédéfinie, remplacer la première distance dans la file d'attente tampon initiale de distances par la distance actuelle de façon à mettre à jour la file d'attente tampon initiale de distances, et prendre la distance actuelle comme distance réelle de l'UAV.

4. Procédé selon la revendication 3, dans lequel, après l'action S22, le procédé comprend en outre les actions consistant à :

S24, lorsque la variance actuelle calculée est supérieure à la seconde valeur prédéfinie, sortir la $N^{ième}$ distance de la file d'attente tampon initiale de distances et exécuter les actions S11 et S12 en fonction des N-1 distances restantes et de la distance actuelle ; et déterminer si la variance actuelle calculée est inférieure ou égale à la seconde valeur prédéfinie ;

S25, lorsque la variance actuelle calculée est inférieure ou égale à la seconde valeur prédéfinie, remplacer la $N^{ième}$ distance dans la file d'attente tampon initiale de distances par la distance actuelle de façon à mettre à jour la file d'attente tampon initiale de distances, et prendre la distance actuelle comme distance réelle de l'UAV.

5. Procédé selon la revendication 4, dans lequel, après l'action S24, le procédé comprend en outre les actions consistant à :

S26, lorsque la variance actuelle calculée est supérieure à la seconde valeur prédéfinie, ajouter la distance actuelle dans une nouvelle file d'attente tampon, et lorsque le nombre de distances dans la nouvelle file d'attente tampon atteint N, trouver les dérivées de la nouvelle file d'attente tampon par rapport au temps pour obtenir N-1 nouvelles vitesses de déplacement et calculer une variance des N-1 nouvelles vitesses de déplacement ;

lorsque la variance des N-1 nouvelles vitesses de déplacement est inférieure ou égale à la seconde valeur prédéfinie, remplacer la file d'attente tampon initiale de distances par la nouvelle file d'attente tampon, et prendre la distance actuelle comme distance réelle de l'UAV ;

de préférence, S27, lorsque la variance des N-1 nouvelles vitesses de déplacement est supérieure à la seconde valeur prédéfinie, ignorer la distance actuelle et calculer une valeur estimée d'une position actuelle de l'UAV en fonction d'une distance et d'une vitesse mesurées la dernière fois, et prendre la valeur estimée de la position actuelle comme distance réelle de l'UAV.

6. Procédé selon l'une quelconque des revendications 2 à 5, dans lequel, avant l'action S11, le procédé comprend en outre les actions consistant à :

mesurer M distances continues sur la base du capteur sonar (110), dans lequel M est supérieur à N ;

extraire N plus grandes distances des M distances et obtenir la file d'attente tampon initiale de distances et la file d'attente tampon initiale de vitesses de déplacement en fonction des N plus grandes distances.

7. Appareil de filtrage pour mesurer la distance d'un véhicule aérien sans pilote UAV, dans lequel un capteur sonar (110) dans l'UAV est configuré pour mesurer la distance, et l'appareil comprend :

un module de mesure (120), configuré pour acquérir N distances continues de l'UAV sur la base d'un capteur sonar (110) et pour déterminer une file d'attente tampon initiale de distances et une file d'attente tampon initiale de vitesses de déplacement de l'UAV en fonction des N distances, dans lequel N est un nombre entier supérieur à 2 ; et

un module de filtrage (130), configuré pour filtrer une distance actuelle de l'UAV mesurée sur la base du capteur sonar (110) en fonction de la file d'attente tampon initiale de distances et de la file d'attente tampon initiale de vitesses de déplacement pour obtenir une distance réelle de l'UAV ;

dans lequel le module de mesure (120) est configuré pour déterminer la file d'attente tampon initiale de distances et la file d'attente tampon initiale de vitesses de déplacement de l'UAV en fonction des N distances continues par les actions consistant à : obtenir N-1 vitesses de déplacement en fonction des N distances et calculer une valeur de niveau de différence des N-1 vitesses de déplacement ; déterminer si chaque distance est valide en fonction de la valeur de niveau de différence ; lorsque chaque distance est valide, constituer la file d'attente tampon initiale de distances sur la base des N distances et constituer la file d'attente tampon initiale de vitesses de déplacement sur la base des N-1 vitesses de déplacement.

8. Appareil selon la revendication 7, dans lequel la valeur de niveau de différence comprend une variance et le module de mesure (120) est configuré pour trouver les dérivées des N distances continues par rapport au temps pour obtenir N-1 vitesses de déplacement de l'UAV. dans lequel les N distances continues sont mesurées dans une durée de temps prédéfinie ; calculer une variance des N-1 vitesses de déplacement ; déterminer si la variance est inférieure ou égale à une première valeur prédéfinie ; et constituer la file d'attente tampon initiale de distances sur la base des N distances et constituer la file d'attente tampon initiale de vitesses de déplacement sur la base des N-1 vitesses de déplacement lorsque la variance est inférieure ou égale à la première valeur prédéfinie, de préférence, la première valeur prédéfinie est déterminée en fonction d'une accélération maximale de l'UAV.

9. Appareil selon la revendication 8, dans lequel le module de filtrage (130) est configuré pour filtrer la distance actuelle de l'UAV mesurée sur la base du capteur sonar (110) en fonction de la file d'attente tampon initiale de distances et de la file d'attente tampon initiale de vitesses de déplacement pour obtenir la distance réelle de l'UAV par les actions consistant à : sortir la première distance de la file d'attente tampon initiale de distances, trouver les dérivées des N-1 distances restantes et de la distance actuelle par rapport au temps pour obtenir les N-1 vitesses de déplacement ; calculer une première variance des N-1 vitesses de déplacement ; et déterminer si la première variance est inférieure ou égale à une seconde valeur prédéfinie ; lorsque la première variance est inférieure ou égale à la seconde valeur prédéfinie, remplacer la première distance dans la file d'attente tampon initiale de distances par la distance actuelle de façon à mettre à jour la file d'attente tampon initiale de distances, et prendre la distance actuelle comme distance réelle de l'UAV.

10. Appareil selon la revendication 9, dans lequel le module de filtrage (130) est en outre configuré pour, lorsque la première variance est supérieure à la seconde valeur prédéfinie, sortir la N$^{ième}$ distance de la file d'attente tampon initiale de distances, calculer une seconde variance en fonction des N-1 distances restantes et de la distance actuelle, et configuré pour, lorsque la seconde variance est inférieure ou égale à une seconde valeur prédéfinie, remplacer la N$^{ième}$ distance dans la file d'attente tampon initiale de distances par la distance actuelle de façon à mettre à jour la file d'attente tampon initiale de distances, et prendre la distance actuelle comme distance réelle de l'UAV.

11. Appareil selon la revendication 10, dans lequel le module de filtrage (130) est en outre configuré pour, lorsque la seconde variance est supérieure à la seconde valeur prédéfinie, ajouter la distance actuelle dans une nouvelle file d'attente tampon et trouver les dérivées de la nouvelle file d'attente tampon par rapport au temps pour obtenir N-1 nouvelles vitesses de déplacement lorsque le nombre de distances dans la nouvelle file d'attente tampon atteint N, et pour calculer une variance des N-1 nouvelles vitesses de déplacement, lorsque la variance des N-1 nouvelles vitesses de déplacement est inférieure ou égale à la seconde valeur prédéfinie, remplacer la file d'attente tampon initiale de distances par la nouvelle file d'attente tampon, et prendre la distance actuelle comme distance réelle de l'UAV ; et
de préférence, le module de filtrage (130) est en outre configuré pour, lorsque la variance des N-1 nouvelles vitesses de déplacement est supérieure à la seconde valeur prédéfinie, ignorer la distance actuelle, obtenir une valeur estimée d'une position actuelle de l'UAV en fonction d'une distance et d'une vitesse mesurées la dernière fois, et prendre la valeur estimée de la position actuelle comme distance réelle de l'UAV.

12. Appareil selon l'une quelconque des revendications 7 à 11, dans lequel le module de mesure (120) est en outre configuré pour mesurer M distances continues par le capteur sonar (110), dans lequel M est supérieur à N ; extraire N plus grandes distances des M distances ; et obtenir la file d'attente tampon initiale de distances et la file d'attente tampon initiale de vitesses de déplacement en fonction des N plus grandes distances.

13. Véhicule aérien sans pilote, comprenant l'appareil de filtrage pour mesurer la distance d'un véhicule aérien sans pilote selon l'une quelconque des revendications 7 à 12.

```
┌─────────────────────────────┐
│   an initial distance buffer queue   │
│   and an initial moving velocity     │
│   buffer queue are acquired          │
└─────────────────────────────┘
              │
              ▼
┌─────────────────────────────┐
│   current distance is judged         │
│   according to the buffer queues     │
└─────────────────────────────┘
              │
              ▼
        ◇ new distance satisfy a ◇──No──┐
        ◇  certain condition?  ◇         │
              │                          ▼
            Yes              ┌───────────────────────────┐
              │             │ the present measurement is not │
              ▼             │ valid, and the buffer queues are │
┌─────────────────────────────┐ │ not updated │
│   the present measurement is valid,  │ └───────────────────────────┘
│   and the buffer queues are updated  │
└─────────────────────────────┘
```

Fig. 1

derivatives of N continuous distances of the UAV measured in a preset time duration via a sonar sensor are found with respect to time to obtain N-1 moving velocities of the UAV — S11

a variance of the N-1 moving velocities is calculated — S12

it is determined whether the variance is less than or equal to a first preset value — S13

when the variance is less than or equal to the first preset value, the first distance buffer queue is constituted based on the N distances and the first moving velocity buffer queue is constituted based on the N-1 moving velocities — S14

a first distance buffer queue and a first moving velocity buffer queue of the UAV are acquired — S1

the earliest distance in the first distance buffer queue is moved out of the queue, and step S11 and step S12 are executed according to the remained N-1 distances and the current distance — S21

it is determined whether a current variance calculated is less than or equal to a second preset value — S22

a current distance is filtered according to the first distance buffer queue and the first moving velocity buffer queue so as to obtain an actual flying distance of the UAV — S2

if so, the first distance i.e. the earliest distance in the first distance buffer queue is replaced by the current distance so as to update the first distance buffer queue, and the current distance is considered as the actual distance of the UAV — S23

Fig. 2

5 continuous distances are measured

the 5 distances are sought differences to obtain 4 velocities

a newest measured distance is moved into the queue

velocities and a variance thereof are calculated according to the 5 extracted distances

a variance of the 4 velocities is calculated

the first distance is moved out from the queue

5 greatest distances is extracted out from the 10 distances

Yes

measured 10 times ?

the variance is less than a threshold ?

No

No

Yes

the distances and velocities are considered as valid initial distances and velocities

Fig. 3

A

B

Ha

Hb

Fig. 4

Fig. 5

unmanned aerial vehicle 100

| sonar sensor 110 | measuring module 120 | filtering module 130 |

Fig. 6

M continuous distances are acquired by a sonar sensor of the UAV in a preset time duration, and N greatest distances are extracted out from the M distances

S101

an initial distance buffer queue and an initial moving velocity buffer queue of the UAV are determined according to the N distances

S102

a present distance is filtered according to the initial distance buffer queue and the initial moving velocity buffer queue to obtain an actual distance of the UAV

S103

Fig. 7

**EP 3 367 127 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011311099 A1
- US 5731782 A
- US 2015268136 A1